# EUROPÄISCHE PATENTSCHRIFT

(11) **EP 1 174 475 B1**
(45) Veröffentlichungstag und Bekanntmachung des Hinweises auf die Patenterteilung: **01.06.2005**
(21) Anmeldenummer: 00115585.2
(22) Anmeldetag: 19.07.2000
(51) Int. Cl.: C09D 11/00, B41J 2/01

(54) **Ink-Jet-Tinte**
Ink-jet ink
Encre pour l'impression par jet d'encre

(43) Veröffentlichungstag der Anmeldung: 23.01.2002
(73) Patentinhaber: TETENAL AG & Co. KG., 22844 Norderstedt (DE)
(72) Erfinder: De Rossi, Umberto, Dr., 22844 Norderstedt (DE)
(74) Vertreter: Glawe, Delfs, Moll & Partner

(56) Entgegenhaltungen:
- EP-A- 0 025 075
- EP-A- 0 424 714
- EP-A- 0 731 149

## Beschreibung

Die Erfindung betrifft eine Ink-Jet-Tinte sowie deren Verwendung zum Bedrucken nicht saugfähiger Oberflächen.

Tintenstrahldrucker arbeiten in der Regel entweder nach dem Continuous-Stream- (CS) oder dem Drop-on-Demand- (DOD) Verfahren. Beim CS-Verfahren werden von einer oder mehrerer Düsen fortlaufend feine Tröpfchen erzeugt, die von einem elektrostatischem Feld entweder auf das zu bedruckende Substrat oder zurück in eine Auffangvorrichtung und in das Tintenreservoir geführt werden. Beim DOD-Verfahren wird Tinte nur dann ausgestoßen, wenn tatsächlich Substrat bedruckt werden soll. Der Ausstoß kann bspw. piezoelektrisch, durch Dampfblasenbildung oder dergleichen geschehen.

Tintenstrahldrucker werden auch benutzt zum Bedrucken harter, nicht saugfähiger Oberflächen, bspw. zum Aufdrucken von Haltbarkeitsdaten auf Lebensmittelbehälter aus Kunststoff, Glas oder dergleichen. Das Bedrucken harter Oberflächen erfordert in der Regel Tinten basierend auf leichtflüchtigen Lösungsmitteln, damit es trotz der geringen oder gar nicht vorhandenen Saugfähigkeit des Substrats zu einem gut deckenden homogenen Druckbild ohne Verschmieren oder dergleichen kommt. Beim CS-Verfahren ist die Verwendung von Tinten basierend auf leicht flüssigen Lösungsmitteln unproblematisch, da auch während der Druckpausen ständig Tinte ausgestoßen wird. Beim DOD-Verfahren führen leichtflüchtige Tinten dagegen zu einem Austrocknen des Druckkopfes und damit einer Verstopfung der Düsen. Die sogenannte Decap-Zeit (diejenige Zeit, die ein Druckkopf während einer Druckpause unabgedeckt funktionsfähig bleibt) ist gering.

Der Erfindung liegt die Aufgabe zugrunde, eine Tinte für Tintenstrahldrucker (Ink-Jet-Tinte) zu schaffen, die auch zum Bedrucken nicht oder wenig saugfähiger Substrate geeignet ist und bei der Verwendung im DOD-Verfahren dennoch eine für die Praxis ausreichende Decap-Zeit aufweist.

Die Erfindung löst diese Aufgabe dadurch, daß die Tinte enthält:
- 10 - 20 Gew.-% Keton mit einer Verdampfungszahl von 50 oder kleiner,
- 10 - 70 Gew.-% , vorzugsweise 10 - 30 Gew.-% weiteres leichtflüchtiges Lösungsmittel mit einer Verdampfungszahl von 50 oder kleiner, das keine Ketonfunktion enthält,
- 5 - 30 Gew.-% stickstoffhaltiges Lösungsmittel mit einer Verdampfungszahl zwischen 50 und 500,
- 1 - 10 Gew.-% schwerflüchtiges Lösungsmittel mit einer Verdampfungszahl von 500 oder größer ausgewählt aus der Gruppe bestehend aus Glykolen, Glykolethern und Glykolestern.

Zunächst seien einige im Rahmen der Erfindung verwendete Begriffe erläutert.

Die Verdampfungszahl (auch Verdunstungszahl genannt) wird bestimmt nach DIN 53170 relativ zu Diethylether, der eine Verdampfungszahl von 1 besitzt. Es wird dabei bestimmt, in welcher Zeit Diethylether einerseits und das zu prüfende Lösungsmittel andererseits unter ansonsten identischen Bedingungen bei einer Prüftemperatur von 23°C verdampfen. Die Verdampfungszahl ist der Faktor, um die das zu prüfende Lösungsmittel langsamer verdampft als Diethylether.

Als leichtflüchtiger Lösungsmittelanteil mit einer Verdampfungszahl von 50 oder kleiner ist zum einen ein bestimmter Anteil wenigstens eines Ketons als auch wenigstens eines weiteren Lösungsmittels mit einer entsprechend geringen Verdampfungszahl vorhanden. Der Begriff "weiteres Lösungsmittel" umfaßt jedes Lösungsmittel, das keine Ketonfunktionen enthält und dem genannten Kriterium hinsichtlich der Verdampfungszahl unterfällt.

Das wenigstens eine stickstoffhaltige Lösungsmittel enthält organisch gebundenen Stickstoff, bspw. Amin- oder Amid-Stickstoff.

Das schwerflüchtige Lösungsmittel dient als Feuchthaltemittel. Besonders bevorzugt ist eine Verdampfungszahl von 500 bis 700, weiter bevorzugt 500 bis 550.

Die beanspruchte Kombination schafft eine Ink-Jet-Tinte, die auf einem nicht porösen Substrat wie Glas oder Polycarbonat ein homogenes und gut haftendes Druckbild abgibt und andererseits eine gute Druckkopfkompatibilität für DOD-Drucken aufweist, insbesondere eine hinreichende Decap-Zeit besitzt.

Sowohl der leichtflüchtige Ketonanteil als auch der Anteil weiterer leichtflüchtiger Lösungsmittel weisen bevorzugt Verdampfungszahlen zwischen 10 und 50 auf. Diese leichtflüchtigen Anteile der Tinte sorgen für ein schnelles Trocknen auch auf nicht-porösen und damit nicht saugfähigen Substraten. Der Ketonanteil trägt insbesondere zur Homogenität des Druckbildes bei, d. h. zur gleichmäßigen Filmbildung auf Oberflächen wie Glas oder Polycarbonat.

Der stickstoffhaltige Lösemittelanteil dient insbesondere der Verbesserung der Filmbildung und damit der Homogenität des Druckbildes auf Polymeroberflächen wie Polycarbonat oder dergleichen. Bevorzugt ist ein Anteil entsprechender Stickstoffhaltiger Lösemittel zwischen 15 und 40 Gew.-%. Der Anteil kann insbesondere dann zwischen 5 und 15 Gew.-% liegen, wenn weitere Lösungsmittel mit Verdampfungszahlen zwischen 50 und 500 zugegen sind, insbesondere Ester, unter denen Butylglykolacetat besonders bevorzugt ist.

Der schwerflüchtige Lösemittelanteil verbessert als Feuchthaltemittel die Druckkopfkompatibilität, verhindert die Düsenverstopfung in Druckpausen und erhöht somit die Decap-Zeit.

Die Viskosität der erfindungsgemäßen Tinte liegt bevorzugt zwischen 10 und 30 mPa∗s, weiter vorzugsweise 10 und 20 mPa∗s. Die Oberflächenspannung wird bevorzugt zwischen 20 und 60 mN/m, weiter vorzugsweise 25 und 50 mN/m, besonders bevorzugt zwischen 28 und 40 mN/m eingestellt. Die gezielte Einstellung von Viskosität und Oberflächenspannung insbesondere durch die Wahl der Lösungsmittelkombination ist dem Fachmann geläufig.

Unter den Ketonen sind besonders bevorzugt cyklische Ketone wie bspw. Cyclohexanon. Verwendbar sind jedoch auch andere Ketone wie bspw. Methylbutylketon, Methylisobutylketon, Methyl-N-amylketon, Methylisoamylketon, Ethylbutylketon, Ethylamylketon, Diisopropylketon, Diisobutylketon oder dergleichen. Die genannten Ketone weisen sämtlich Verdampfungszahlen zwischen 10 und 50 auf. Insbesondere in Kombinationen mit weiteren Ketonen sind auch noch leichtflüchtigere Ketone wie bspw. Aceton, Methylethylketon, Methylpropylketon oder Methylisopropylketon verwendbar. Methylcyclohexanon ist ebenfalls noch als leichtflüchtiges Keton im Sinne des Merkmals a) des Anspruchs 1 anzusehen, obwohl seine Verdampfungszahl in Tabellenwerken auch mit 53 angegeben wird.

Der Anteil weiterer leichtflüchtiger Lösungsmittel kann insbesondere polare Lösungsmittel wie bspw. Alkohole und Ester umfassen. Beispielhaft genannt seien übliche Alkohole wie Methanol, Ethanol, n- und Isopropanol, n- und Isobutanol und dergleichen. Besonders bevorzugt sind Ethanol sowie 1-Methoxypropan-2-ol (PM). Unter den Estern ist besonders bevorzugt 1-Methoxy-2-propylacetat (PMA).

Das stickstoffhaltige Lösungsmittel ist besonders bevorzugt ein cyclisches Amin wie bspw. ein Pyrrolidon. Besonders bevorzugt ist N-Methyl-2-pyrrolidon. Cyclische Amine weisen einen besonders günstigen Einfluß auf die Homogenität des Druckbildes auf nicht-porösen Substraten auf.

Als schwerflüchtige Lösungsmittelanteile sind insbesondere Glykolether (bevorzugt mit Verdampfungszahlen von 500 bis 700) verwendbar. Beispielhaft genannt seien Dipropylenglykolmonomethylether (DPM). Glykolester wie Ethylenglykoldiacetat sind ebenfalls verwendbar. Schwerflüchtige Glykole mit Verdampfungszahlen auch deutlich über 700 können, entweder allein oder bevorzugt in Kombination mit vorgenannten schwerflüchtigen Lösungsmitteln, ebenfalls verwendet werden.

Die in Anspruch 1 genannten Bestandteile der erfindungsgemäßen Tinte sind keine abschließende Aufzählung. Die Tinte kann weitere Lösemittelanteile enthalten, insbesondere nicht-stickstoffhaltige Lösemittel mit Verdampfungszahlen zwischen 50 und 500. Beispielhaft seien Alkohole wie Pentanol genannt. Andere Lösungsmittel dieser Art sind Ester, wie beispielsweise Butylglykolacetat, die bevorzugt insbesondere dann zugesetzt werden, wenn der Anteil stickstoffhaltiger Lösemittel mit Verdampfungszahlen zwischen 50 und 500 im Bereich 5 bis 15 Gew.-% liegt.

In jedem Fall enthält die erfindungsgemäße Tinte Farbstoffe. Es kann sich um in dem Lösemittel lösliche Farbstoffe oder um unlösliche Pigmente handeln, wobei Pigmente aufgrund ihrer Verwitterungsbeständigkeit für die Bedruckung harter Substrate bevorzugt sind. Bevorzugt weisen die Pigmente mittlere Teilchengrößen von 1 µm oder weniger, besonders bevorzugt 0,5 µm oder weniger auf. Der Anteil der Tinte an löslichem und/oder Pigmentfarbstoff beträgt bevorzugt 1 - 10 Gew.-%, weiter bevorzugt 1 - 5 Gew.-%.

Geeignete lösliche Farbstoffe und Pigmente sind dem Fachmann geläufig und bspw. ausführlich beschrieben in WO-A-96/23844. Die Offenbarung dieser Schrift wird durch Bezugnahme darauf auch zum Gegenstand der vorliegenden Anmeldung gemacht.

Zur Verbesserung der Filmbildung und Haftung auf harten Substraten enthält die Tinte bevorzugt ein Polymer, weiter bevorzugt ein physikalisch trocknendes Polymer. Der Begriff physikalische Trocknung oder physikalische Härtung bezeichnet einen Vorgang, bei dem die Trocknung bzw. Härtung durch Lösungsmittelabgabe erfolgt, bei dem aber Polymerisationsgrad bzw. Molmasse des trocknenden Polymers unverändert bleiben (siehe auch Römpp-Lexikon "Lacke und Druckfarben"). Der K-Wert (definiert in DIN 53726:1983-09, siehe auch Römpp-Lexikon "Lacke und Druckfarben" der Polymere sollte bevorzugt 38 - 42 betragen. Unter diesen Polymeren ist besonders bevorzugt Polyvinylbutyral sowie Vinylchlorid-Copolymere, insbesondere Copolymere mit Maleinsäure und/oder Vinylacetat. Die Copolymere können freie Carboxylgruppen aufweisen. Der Anteil dieser Polymere an der Tinte liegt bevorzugt zwischen 0,5 und 10 Gew.-%, weiter vorzugsweise zwischen 1 und 5 Gew.-%.

Bevorzugt enthält die Tinte zusätzlich ein organisches Silikonadditiv, bspw. ein Silan wie 3-Methacryloxypropyltrimethoxysilan. Der bevorzugte Anteil eines solchen Additivs an der Tinte liegt bei 5 Gew.-% oder kleiner, weiter vorzugsweise 2 Gew.-% oder kleiner. Bevorzugt ist es, wenn der Gewichtsanteil des vorstehend genannten Polymers um den Faktor 4 oder mehr größer als der Gewichtsanteil des Silikonadditivs ist. Das genannte Silikonadditiv verbessert insbesondere die Haftung der Tinte auf einem harten Substrat.

Gegenstand der vorliegenden Erfindung ist ferner die Verwendung einer erfindungsgemäßen Ink-Jet-Tinte zum Bedrucken nicht oder nur wenig saugfähiger Oberflächen im DOD-Verfahren. Diese Oberfläche kann bspw. bestehen aus Metall, Glas, Kunststoff oder einem keramischen Material. Die Erfindung wird nachstehend anhand eines Beispiels und Vergleichsbeispielen erläutert.

### Beispiel 1

Folgende Bestandteile werden zu einer erfindungsgemäßen Tinte angesetzt:

| | |
|---|---|
| PMA | 24% |
| Pigment | 3% |
| Cyclohexanon | 15% |
| Propanol | 5% |
| Butanol | 5% |
| Pentanol | 20% |
| Vinylchlorid-Maleinsäurecopolymer | 3 % |
| NMP | 20 % |
| DPM | 5 % |

| | |
|---|---|
| Viskosität | 11.2 mPas*s |
| Oberflächenspannung | 28.2 mN/m |

Das eingesetzte Pigment ist Pigment Blue 15:3, das beispielsweise von der Firma Ciba unter der Bezeichnung "Mikrolith® A" sowie "Mikrolith® K" erhältlich ist. Als Vinylchlorid-Maleinsäurecopolymer wird "Vilit® MC 39" der Firma Hüls eingesetzt.

Bei diesem und sämtlichen folgenden Beispielen werden beim Ansetzen der Tinte zunächst das stickstoffhaltige Lösemittel (NMP) sowie das leicht flüchtige Keton (Cyclohexanon) miteinander gemischt und in der Mischung das Pigment homogen dispergiert. Anschließend werden die übrigen Lösungsmittel zugegeben.

### Beispiel 2

Folgende Bestandteile werden zu einer erfindungsgemäßen Tinte angesetzt:

| | |
|---|---|
| PMA | 27% |
| Pigment | 3% |
| Cyclohexanon | 15% |
| NMP | 15% |
| DPM | 5% |
| Butylglykolacetat | 32% |
| Vinylchlorid-Maleinsäurecopolymer | 3% |

| | |
|---|---|
| Viskosität | 10.2 mPas*s |
| Oberflächenspannung | 29.7 mN/m |

### Beispiel 3

Folgende Bestandteile werden zu einer erfindungsgemäßen Tinte angesetzt:

| | |
|---|---|
| PMA | 41% |
| Pigment | 3% |
| Cyclohexanon | 20% |
| NMP | 15% |
| DPM | 5% |
| Pentanol | 10% |
| Butanol | 3% |
| Vinylchlorid-Maleinsäurecopolymer | 3% |

| | |
|---|---|
| Viskosität | 12.0 mPas*s |
| Oberflächenspannung | 29.5 mN/m |

### Beispiel 4

Folgende Bestandteile werden zu einer erfindungsgemäßen Tinte angesetzt:

| | |
|---|---|
| PMA | 41% |
| Pigment | 3% |
| Cyclohexanon | 20% |
| NMP | 15% |
| DPM | 5% |
| Pentanol | 10% |
| Butanol | 2% |
| Vinylchlorid-Maleinsäurecopolymer | 4% |

| | |
|---|---|
| Viskosität | 14.8 mPas*s |
| Oberflächenspannung | 29.4 mN/m |

### Vergleichsbeispiel 1:

| | |
|---|---|
| PMA | 14% |
| Pigment | 3% |
| Cyclohexanon | 5% |
| Propanol | 5% |
| Butanol | 5% |
| Pentanol | 10% |
| Vinylchlorid-Maleinsäurecopolymer | 3% |
| NMP | 50% |
| DPM | 5% |

| | |
|---|---|
| Viskosität | 10.2 mPas*s |
| Oberflächenspannung | 31.2 mN/m |

Bei diesem Vergleichsbeispiel liegt der Cyclohexanon-Anteil nicht innerhalb der durch Anspruch 1 vorgegebenen Grenzen.

### Vergleichsbeispiel 2:

| | |
|---|---|
| PMA | 29% |
| Pigment | 3% |
| Cyclohexanon | 5% |
| Propanol | 5% |
| Butanol | 5% |
| Pentanol | 20% |
| Vinylchlorid-Maleinsäurecopolymer | 3% |
| NMP | 25% |
| DPM | 5% |

| | |
|---|---|
| Viskosität | 10.1 mPas*s |
| Oberflächenspannung | 29.8 mN/m |

Bei diesem Vergleichsbeispiel liegt der Cyclohexanon-Anteil außerhalb des erfindungsgemäßen Bereichs.

Mit der erfindungsgemäßen Tinte und den Vergleichstinten wurden mittels eines Piezo-Tintenstrahldruckkopfes harte Oberflächen aus Glas und Polycarbonat bedruckt. Folgende Eigenschaften der Tinten wurden geprüft:

### Druckkopfkompatibilität

Mit einem Piezo-Druckkopf wurden Linien gedruckt, zwischen jedem Druckvorgang wurden Pausen von zunächst 30 Sekunden, dann einer Minute, 2 Minuten, 3 Minuten usw. ohne Schutzabdeckung eingelegt. Nach dem Ausdrucken wird das Druckbild unter dem Mikroskop auf anfängliche Aussetzer geprüft, die auf ein verzögertes Anschreiben verstopfter Düsen hinweisen. Die Druckkopfkompatibilität wird als sehr gut (++), gut (+), weniger zufriedenstellend (-) oder nicht zufriedenstellend (--) beurteilt. Eine sehr gute Druckkopfkompatibilität bedeutet, daß bei der Wiederinbetriebnahme nach der Pause sämtliche Düsen ein sofortiges Anschreiben zeigen.

### Homogenität

Auf Glas und Polycarbonat werden Volltonflächen gedruckt und die Homogenität der Filmbildung und Benetzung visuell beurteilt (Bildung von Kratern, Blasen etc.). Die Homogenität wird nach dem oben angegebenen Notenschema beurteilt.

### Haftung auf Glas

Es wurden Volltonflächen gedruckt und diese an der Luft vollständig trocknen gelassen. Die bedruckten Flächen wurden 14 Tage lang gewässert. Anschließend wurde versucht, den Druckfilm mit dem Finger abzurubbeln. Die Beurteilung der Haftung erfolgte nach dem gleichen Notenschema.

### Witterungstest auf Glas

Auf Glas wurden Volltonflächen gedruckt und diese folgendem Verwitterungszyklus über 360 Stunden hinweg unterworfen: 1 Stunde und 2 Minuten Bestrahlung mit Licht mit einer Intensität von 750 Watt pro m², 18 Minuten Wässerung.

Die Beurteilung der Witterungsbeständigkeit erfolgte nach folgenden Kriterien:
++: Keine Verwitterung erkennbar
+: Leichte Ablösungen des Druckfilms am Rand
-: Teilweise Filmablösung
--: Weitgehend vollständige Filmablösung

Die Ergebnisse dieser Tests sind in der nachfolgenden Tabelle zusammengefaßt.

| Formel | Druckkopfkompatibilität | Homogenität | Haftung in feuchtem Zustand: Rubbel-Test auf Glas | Witterungstest auf Glas |
|---|---|---|---|---|
| Beispiel 1 | ++ | ++ | ++ | ++ |
| Beispiel 2 | ++ | ++ | ++ | ++ |
| Beispiel 3 | ++ | ++ | ++ | ++ |
| Beispiel 4 | ++ | ++ | ++ | ++ |
| Vergleichsbeispiel 1 | ++ | -- | | |
| Vergleichsbeispiel 2 | -- | | | |

Bei Vergleichsbeispiel 1 war die Homogenität so schlecht, daß die weitergehenden Tests zur Haftung und Verwitterung nicht durchgeführt wurden. Gleiches gilt bei Vergleichsbeispiel 2 hinsichtlich der schlechten Druckkopfkompatibilität.

## Patentansprüche

1. Ink Jet Tinte, **dadurch gekennzeichnet, daß** sie enthält:
a) 10 - 20 Gew.-% Keton mit einer Verdampfungszahl von 50 oder kleiner,
b) 10 - 70 Gew.-% , vorzugsweise 10 - 30 Gew.-% weiteres leichtflüchtiges Lösungsmittel mit einer Verdampfungszahl von 50 oder kleiner, das keine Ketonfunktion enthält,
c) 5 - 30 Gew.-% stickstoffhaltiges Lösungsmittel mit einer Verdampfungszahl zwischen 50 und 500,
d) 1 - 10 Gew.-% schwerflüchtiges Lösungsmittel mit einer Verdampfungszahl von 500 oder größer ausgewählt aus der Gruppe bestehend aus Glykolen, Glykolethern und Glykolestern.

2. Ink Jet Tinte nach Anspruch 1, **dadurch gekennzeichnet, daß** die Viskosität 10 - 30 mPa∗s, vorzugsweise 10 - 20 mPa∗s beträgt.

3. Ink Jet Tinte nach Anspruch 1 oder 2, **dadurch gekennzeichnet, daß** ihre Oberflächenspannung 20 - 60 mN/m, vorzugsweise 25 - 50 mN/m, weiter vorzugsweise 28 - 40 mN/m beträgt.

4. Ink Jet Tinte nach einem der Ansprüche 1 bis 3, **dadurch gekennzeichnet, daß** das Keton ein cyclisches Keton, vorzugsweise Cyclohexanon, ist.

5. Ink Jet Tinte nach einem der Ansprüche 1 bis 3, **dadurch gekennzeichnet, daß** das Keton Methylisobutylketon (MIBK) ist.

6. Ink Jet Tinte nach einem der Ansprüche 1 bis 5, **dadurch gekennzeichnet, daß** das weitere leichtflüchtige Lösungsmittel mit einer Verdampfungszahl von 50 oder kleiner ausgewählt ist aus der Gruppe bestehend aus 1-Methoxypropan-2-ol (PM), 1-Methoxy-2-propylacetat (PMA) und Ethanol.

7. Ink Jet Tinte nach einem der Ansprüche 1 bis 6, **dadurch gekennzeichnet, daß** das stickstoffhaltige Lösungsmittel mit einer Verdampfungszahl zwischen 50 und 500 ein cyclisches Amin, vorzugsweise N-Methyl-2-pyrrolidon, ist.

8. Ink Jet Tinte nach einem der Ansprüche 1 bis 7, **dadurch gekennzeichnet, daß** das schwerflüchtige Lösungsmittel mit einer Verdampfungszahl von 500 oder größer Dipropylenglykolmonomethylether (DPM) oder Propylenglykol ist.

9. Ink Jet Tinte nach einem der Ansprüche 1 bis 8, **dadurch gekennzeichnet, daß** sie als Farbstoff einen löslichen Farbstoff enthält.

10. Ink Jet Tinte nach einem der Ansprüche 1 bis 8, **dadurch gekennzeichnet, daß** sie als Farbstoff einen Pigmentfarbstoff enthält.

11. Ink Jet Tinte nach Anspruch 10, **dadurch gekennzeichnet, daß** die Farbstoffpigmente eine mittlere Teilchengröße von weniger als 1000 nm, vorzugsweise weniger als 500 nm aufweisen.

12. Ink Jet Tinte nach einem der Ansprüche 1 bis 11, **dadurch gekennzeichnet, daß** sie zusätzlich ein physikalisch trocknendes Polymer enthält.

13. Ink Jet Tinte nach Anspruch 12, **dadurch gekennzeichnet, daß** das Polymer ausgewählt ist aus der Gruppe bestehend aus Polyvinylbutyral und Vinylchlorid-Copolymeren.

14. Ink Jet Tinte nach Anspruch 12 oder 13, **dadurch gekennzeichnet, daß** der Polymeranteil 0,5 - 10 Gew.-%, vorzugsweise 1 - 5 Gew.-% beträgt.

15. Ink Jet Tinte nach einem der Ansprüche 1 bis 14, **dadurch gekennzeichnet, daß** sie zusätzlich ein Silikonadditiv enthält.

16. Ink Jet Tinte nach Anspruch 15, **dadurch gekennzeichnet, daß** der Silikonadditivanteil 0,1 - 5 Gew.-%, vorzugsweise 0,2 - 2 Gew.-% beträgt.

17. Verwendung einer Ink Jet Tinte nach einem der Ansprüche 1 bis 16 zum Bedrucken nicht saugfähiger Oberflächen im Drop on Demand Verfahren.

18. Verwendung nach Anspruch 17, **dadurch gekennzeichnet, daß** die Oberfläche aus Metall, Glas, Kunststoff oder einem keramischen Material ist.

## Claims

1. Ink-jet ink **characterized in that** it comprises:
a) 10% - 20% by weight of ketone having an evaporation number of 50 or less,
b) 10% - 70%, preferably 10% - 30% by weight of further high-volatility solvent having an evaporation number of 50 or less and containing no ketone function,
c) 5% - 30% by weight of nitrogen-containing solvent having an evaporation number of between 50 and 500,
d) 1% - 10% by weight of low-volatility solvent having an evaporation number of 500 or more and selected from the group consisting of glycols, glycol ethers and glycol esters.

2. Ink-jet ink according to Claim 1, **characterized in that** the viscosity is 10 - 30 mPa∗s, preferably 10 - 20 mPa∗s.

3. Ink-jet ink according to Claim 1 or 2, **characterized in that** its surface tension is 20 - 60 mN/m, preferably 25 - 50 mN/m, more preferably 28 - 40 mN/m.

4. Ink-jet ink according to any one of Claims 1 to 3, **characterized in that** the ketone is a cyclic ketone, preferably cyclohexanone.

5. Ink-jet ink according to any one of Claims 1 to 3, **characterized in that** the ketone is methyl isobutyl ketone (MIBK).

6. Ink-jet ink according to any one of Claims 1 to 5, **characterized in that** the further high-volatility solvent having an evaporation number of 50 or less is selected from the group consisting of 1-methoxypropan-2-ol (PM), 1-methoxy-2-propyl acetate (PMA) and ethanol.

7. Ink-jet ink according to any one of Claims 1 to 6, **characterized in that** the nitrogen-containing solvent having an evaporation number of between 50 and 500 is a cyclic amine, preferably N-methyl-2-pyrrolidone.

8. Ink-jet ink according to any one of Claims 1 to 7, **characterized in that** the low-volatility solvent having an evaporation number of 500 or more is dipropylene glycol monomethyl ether (DPM) or propylene glycol.

9. Ink-jet ink according to any one of Claims 1 to 8, **characterized in that** it comprises as colorant a soluble colorant.

10. Ink-jet ink according to any one of Claims 1 to 8, **characterized in that** it comprises as colorant a pigment colorant.

11. Ink-jet ink according to Claim 10, **characterized in that** the colorant pigments have a mean particle size of less than 1000 nm, preferably less than 500 nm.

12. Ink-jet ink according to any one of Claims 1 to 11, **characterized in that** it further comprises a physically drying polymer.

13. Ink-jet ink according to Claim 12, **characterized in that** the polymer is selected from the group consisting of polyvinyl butyral and vinyl chloride copolymers.

14. Ink-jet ink according to Claim 12 or 13, **characterized in that** the polymer fraction is 0.5% - 10% by weight, preferably 1% - 5% by weight.

15. Ink-jet ink according to any one of Claims 1 to 14, **characterized in that** it further comprises a silicone additive.

16. Ink-jet ink according to Claim 15, **characterized in that** the silicone additive fraction is 0.1% - 5% by weight, preferably 0.2% - 2% by weight.

17. Use of an ink-jet ink according to any one of Claims 1 to 16 for printing non-absorbent surfaces by the drop-on-demand method.

18. Use according to Claim 17, **characterized in that** the surface is of metal, glass, plastic or a ceramic material.

## Revendications

1. Encre pour imprimantes à jet d'encre, **caractérisée en ce qu'**elle contient :
a) de 10 à 20% en poids d'une cétone ayant un indice d'évaporation de 50 ou inférieur,
b) de 10 à 70% en poids, de préférence de 10 à 30% en poids d'un autre solvant très volatil ayant un indice d'évaporation de 50 ou inférieur et ne contenant pas de fonction cétone,
c) de 5 à 30% en poids d'un solvant contenant de l'azote et ayant un indice d'évaporation dans la plage de 50 à 500.
d) de 1 à 10% en poids d'un solvant peu volatil ayant un indice d'évaporation de 500 ou supérieur, choisi dans le groupe constitué par les glycols, les éthers de glycols et les esters de glycols.

2. Encre pour imprimantes à jet d'encre selon la revendication 1, **caractérisée en ce que** la viscosité se situe dans la plage de 10 à 30 mPa·s, de préférence de 10 à 20 mPa·s.

3. Encre pour imprimantes à jet d'encre selon la revendication 1 ou la revendication 2, **caractérisée en ce que** sa tension superficielle se situe dans la plage de 20 à 60 mN/m, de préférence de 25 à 50 mN/m et de façon plus préférentielle de 28 à 40 mN/m.

4. Encre pour imprimantes à jet d'encre selon l'une des revendications 1 à 3, **caractérisée en ce que** la cétone est une cétone cyclique, de préférence la cyclohexanone.

5. Encre pour imprimantes à jet d'encre selon l'une des revendications 1 à 3, **caractérisée en ce que** la cétone est la méthylisobutylcétone (MIBK).

6. Encre pour imprimantes à jet d'encre selon l'une des revendications 1 à 5, **caractérisée en ce que** l'autre solvant très volatil ayant un indice d'évaporation de 50 ou inférieur est choisi dans le groupe constitué par le 1-méthoxypropan-2-ol (PM), l'acétate de 1-méthoxy-2-propyle (PMA) et l'éthanol.

7. Encre pour imprimantes à jet d'encre selon l'une des revendications 1 à 6, **caractérisée en ce que** le solvant contenant de l'azote et ayant un indice d'évaporation dans la plage de 50 et 500 est une amine cyclique, de préférence la N-méthyl-2-pyrrolidone.

8. Encre pour imprimantes à jet d'encre selon l'une des revendications 1 à 7, **caractérisée en ce que** le solvant peu volatil ayant un indice d'évaporation de 500 ou supérieur est le dipropylèneglycol monométhyléther (DPM) ou le propylène glycol.

9. Encre pour imprimantes à jet d'encre selon l'une des revendications 1 à 8, **caractérisée en ce qu'**elle contient comme colorant un colorant soluble.

10. Encre pour imprimantes à jet d'encre selon l'une des revendications 1 à 8, **caractérisée en ce qu'**elle contient comme colorant un colorant pigmentaire.

11. Encre pour imprimantes à jet d'encre selon la revendication 10, **caractérisée en ce que** les pigments colorants présentent une taille de particules moyenne inférieure à 1000 nm, de préférence inférieure à 500 nm.

12. Encre pour imprimantes à jet d'encre selon l'une des revendications 1 à 11, **caractérisée en ce qu'**elle contient en plus un polymère séchant par voie physique.

13. Encre pour imprimantes à jet d'encre selon la revendication 12, **caractérisée en ce que** le polymère est choisi dans le groupe constitué par le polyvinylbutyral et les copolymères de chlorure de vinyle.

14. Encre pour imprimantes à jet d'encre selon la revendication 12 ou 13, **caractérisée en ce que** la proportion de polymère se situe dans la plage de 0,5 à 10% en poids, de préférence de 1 à 5% en poids.

15. Encre pour imprimantes à jet d'encre selon l'une des revendications 1 à 14, **caractérisée en ce qu'**elle contient en plus un additif contenant du silicium.

16. Encre pour imprimantes à jet d'encre selon la revendication 15, **caractérisée en ce que** la proportion d'additif contenant du silicium se situe dans la plage de 0,1 à 5% en poids, de préférence de 0,2 à 2% en poids.

17. Utilisation d'une encre pour imprimantes à jet d'encre selon l'une des revendications 1 à 16 pour imprimer des surfaces non absorbantes selon le procédé à jet d'encre contrôlé (Drop on Demand).

18. Utilisation selon la revendication 17, **caractérisée en ce que** la surface est en métal, en verre, en matière plastique ou en un matériau céramique.
